# DEMANDE DE BREVET EUROPEEN

(11) **EP 2 549 715 A1**
(43) Date de publication de la demande: **23.01.2013**
(21) Numéro de dépôt: 12177314.7
(22) Date de dépôt: 20.07.2012
(51) Int. Cl.: H04L 29/08, G06F 9/445

(54) **Système de distribution de données à base d'échange de messages asynchrones.**

(30) Priorité: 22.07.2011 FR 1102295
(71) Demandeur: Thales, 92200 Neuilly Sur Seine (FR)
(72) Inventeur: Labéjof, Jonathan, 91767 PALAISEAU (FR); Merle, Philippe, 59650 VILLENEUVE D'ASCQ (FR); Léger, Antoine, 91767 PALAISEAU (FR); Seinturier, Lionel, 59650 VILLENEUVE D'ASCQ (FR)
(74) Mandataire: Blot, Philippe Robert Emile

(57) **Abrégé**

L'invention concerne un système de distribution de données à base d'échange de messages asynchrones en mode publication/souscription, permettant l'échange de données selon diverses qualités de service entre au moins un émetteur apte à mettre en oeuvre une application de fourniture de données et un récepteur apte à mettre en oeuvre une application de réception des données, les émetteurs et récepteurs étant interconnectés via un réseau de communications, via des objets de communication, chaque objet de communication fournissant une interface de programmation pour échanger des messages selon ledit système de distribution. Ce système de distribution de données est caractérisé en ce qu'un objet de communication (60) est décomposé en une pluralité de composants (61-65) comprenant un composant de premier type (61) comprenant ladite interface de programmation et au moins un composant de deuxième type (62, 63, 64, 65) apte à contrôler des informations liées au composant de premier type et fournissant des opérations responsables de fonctionnalités reconfigurables en cours d'exécution, ledit objet de communication comportant un mécanisme de fourniture de demande de reconfiguration en cours d'exécution audit au moins un composant de deuxième type (62), de manière à permettre la reconfiguration en cours d'exécution d'une fonctionnalité associée à l'objet de communication. L'invention concerne également un procédé de reconfiguration de fonctionnalités d'un système de distribution associé.

## Description

La présente invention concerne un système de distribution de données à base d'échange de messages asynchrones en mode publication/souscription, permettant l'échange de données selon diverses qualités de service entre au moins un émetteur apte à mettre en oeuvre une application de fourniture de données et un récepteur apte à mettre en oeuvre une application de réception des données, les émetteurs et récepteurs étant interconnectés via un réseau de communications.

L'invention s'applique notamment dans le cadre des systèmes distribués mettant en communication des applications mises en oeuvre par divers noeuds d'un réseau de communications, par l'intermédiaire de messages véhiculant des données.

On connaît notamment le modèle d'échange de messages appelé « Data Distribution Service » (DDS) normalisé par l'organisation « Object Management Group » (OMG), décrit notamment dans le document « Data Distribution Service for Real-time Systems », version 1.2, janvier 2007. DDS est un intergiciel (« middleware » en anglais) spécifiant une technique évoluée d'échanges de données via des messages asynchrones et permettant une distribution des données quasi temps-réel et plusieurs niveaux de qualité de service, adaptée pour des systèmes embarqués. DDS est un système centré sur les données qui gère la distribution ciblée, c'est-à-dire leur adressage ainsi que leur sérialisation/dé-sérialisation.

Le système DDS est appliqué dans un domaine (« Domain » en anglais) qui regroupe un ensemble de machines, ou noeuds, réparties sur le réseau de communications et qui partagent des données communes. Le système permet la publication de données par des applications de fourniture de données (« publisher » en anglais), la souscription à des données partagées par des applications de réception des données (« subscriber » en anglais), la modification des données partagées et la notification de ces modifications aux autres machines du domaine. Un noeud du domaine peut être fournisseur, récepteur ou les deux à la fois.

Grâce au mode de fonctionnement asynchrone publication/souscription, les diverses applications d'un domaine n'ont pas besoin de se connaître mutuellement. Le système DDS définit un mécanisme de découverte des services fournis par les diverses applications, des mécanismes de spécification du fonctionnement lors de l'envoi et de la réception des messages. Le système DDS définit des entités ou objets de communication qui fournissent des interfaces de programmation pour l'échange de messages, et offre une vingtaine de qualités de service (QoS) permettant de contrôler la distribution des données comme par exemple la durée de vie d'une donnée sur le réseau, la durée de vie d'une donnée sur un noeud du système, la persistance d'une donnée dans le réseau, la fiabilité de la transmission des données sur le réseau de communications, un temps minimum et/ ou un temps maximum de transmission. Chaque entité a un ensemble de qualités de service associées.

Le système DDS est conçu pour offrir de la flexibilité et pour simplifier les interactions d'applications à travers un réseau de communications.

Cependant, le système DDS n'offre pas la possibilité d'évolution en cours d'exécution. En effet, une fois le système DDS déployé sur un ensemble d'applications d'un réseau distribué et mis en exécution, de nombreuses qualités de service, comme la durée de vie d'une donnée sur un noeud du système, sont figées et ne peuvent pas être modifiées.

Par exemple, si une nouvelle version de DDS avec des nouvelles qualités de service est disponible, une mise à jour d'un système DDS déjà déployé nécessite la sauvegarde de l'état courant ou contexte des objets de communication sur chaque noeud du système avant l'arrêt de la version en cours d'exécution, puis l'installation de la nouvelle version et l'insertion des données sauvegardées dans la nouvelle version. Cela nécessite l'intervention d'un développeur au niveau du code de programmation de la nouvelle version.

Il serait utile d'avoir la possibilité de faire évoluer plus aisément un système de distribution de données à base d'échange de messages asynchrones en mode publication/souscription de type DDS.

A cet effet, l'invention propose un système de distribution de données à base d'échange de messages asynchrones en mode publication/souscription, permettant l'échange de données selon diverses qualités de service entre au moins un émetteur apte à mettre en oeuvre une application de fourniture de données et un récepteur apte à mettre en oeuvre une application de réception des données, les émetteurs et récepteurs étant interconnectés via un réseau de communications, via des objets de communication, chaque objet de communication fournissant une interface de programmation pour échanger des messages selon ledit système de distribution.

Le système de distribution de données est **caractérisé en ce qu'**un objet de communication est décomposé en une pluralité de composants comprenant un composant de premier type comprenant ladite interface de programmation et au moins un composant de deuxième type apte à contrôler des informations liées au composant de premier type et fournissant des opérations responsables de fonctionnalités reconfigurables en cours d'exécution,

ledit objet de communication comportant un mécanisme de fourniture de demande de reconfiguration en cours d'exécution audit au moins un composant de deuxième type, de manière à permettre la reconfiguration en cours d'exécution d'une fonctionnalité associée à l'objet de communication.

Avantageusement, une telle décomposition d'un objet de communication en une pluralité de composants, dont des composants de deuxième type qui sont modifiables permet une reconfiguration des fonctionnalités d'un noeud, en cours d'exécution, en ne modifiant que ce qui est nécessaire, notamment l'ajout ou la modification des qualités de service offertes. De plus, cette architecture en composant apporte une facilité d'intégration dans des systèmes distribués s'appuyant déjà sur des composants, comme par exemple selon le modèle CCM (« CORBA Component Model ») ou SCA (« Service Component Architecture »).

Le système de distribution de données selon l'invention peut présenter une ou plusieurs des caractéristiques ci-dessous :
- chaque objet de communication a un ensemble de qualités de service prédéterminé associé et la reconfiguration en cours d'exécution comprend l'ajout et/ou la modification en cours d'exécution d'une qualité de service associée à l'objet de communication ;
- un dit composant de deuxième type est apte à sauvegarder des informations de contexte liées à au moins un élément contenu dans le composant de premier type ;
- une dite information de contexte est une valeur correspondant à une qualité de service associée à audit objet de communication ;
- ladite décomposition comprend une pluralité de composants de deuxième type incluant un composant de gestion de règles, un composant de communication, un composant de découverte/ajout/suppression de contenu et un composant de gestion de reconfiguration ;
- un objet de communication contient au moins un objet de communication cible qui hérite dudit objet de communication, un dit objet de communication cible étant également décomposé en une pluralité de composants, un objet de communication cible étant apte à changer d'objet de communication parent à l'exécution.

Selon un autre aspect, l'invention a également pour objet un procédé de reconfiguration de fonctionnalités d'un système de distribution de données à base d'échange de messages asynchrones en mode publication/souscription tel que brièvement décrit ci-dessus, en cours d'exécution dans un réseau de communications,.

Ce procédé est **caractérisé en ce qu'**il comporte les étapes suivantes, mises en oeuvre pour un objet de communication:
- création d'un composite associé audit objet de communication, contenant un composant de premier type et au moins un composant de deuxième type apte à contrôler des informations liées au composant de premier type et fournissant des opérations responsables de fonctionnalités reconfigurables en cours d'exécution,
- vérification de l'arrêt de l'exécution dudit objet de communication, et
- mise à jour des propriétés du composant de deuxième type en fonction dudit objet de communication.

Selon une caractéristique, le procédé de reconfiguration de fonctionnalités d'un système de distribution de données comprend, en outre, lors d'une modification d'une qualité de service associée à un objet de communication, les étapes suivantes :
- réception par le composant de premier type dudit objet de communication d'une nouvelle valeur de qualité de service associée à ladite qualité de service à modifier,
- redirection de ladite nouvelle valeur de qualité de service à un composant de deuxième type associé audit objet de communication, et
- réalisation d'une implémentation de ladite qualité de service correspondant à ladite nouvelle valeur de qualité de service par ledit composant de deuxième type.

D'autres caractéristiques et avantages de l'invention ressortiront de la description qui en est donnée ci-dessous, à titre indicatif et nullement limitatif, en référence aux figures annexées, parmi lesquelles :
- la figure 1 est un schéma illustrant un ensemble d'émetteurs/récepteurs aptes à communiquer selon le système de distribution de données de l'invention ;
- la figure 2 est un schéma d'un dispositif mettant en oeuvre l'invention ;
- la figure 3 est un diagramme illustrant la décomposition en composants d'un objet de communication selon l'invention ;
- la figure 4 est un diagramme illustrant un exemple d'objet de communication DomainComposite selon l'invention ;
- la figure 5 est un organigramme d'un procédé de reconfiguration de fonctionnalités d'un système de distribution de données selon l'invention, et
- la figure 6 est un organigramme d'un procédé de modification d'une qualité de service associée à un objet de communication selon l'invention.

L'invention sera décrite ci-après dans son application avec le système de distribution à échange de messages DDS de l'OMG. De manière générale, l'invention s'applique avec tout système de distribution de données à base de messages en mode publication/souscription.

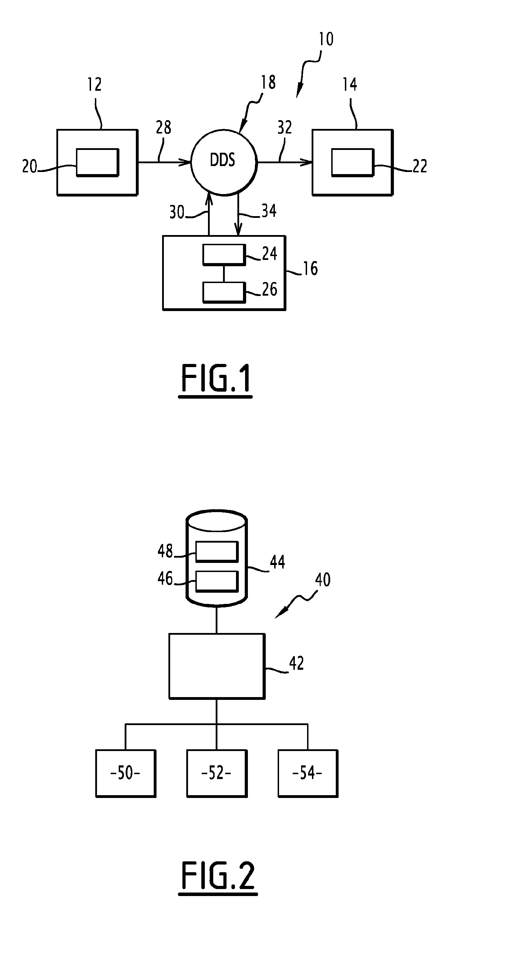

La figure 1 illustre de manière schématique un ensemble de dispositifs 10 formant les noeuds 12, 14, 16 d'un réseau distribué apte à communiquer en utilisant un système à base de messages DDS 18. Dans cet exemple, le noeud 12 est un noeud émetteur comprenant une application de fourniture de données (« publisher ») 20, le noeud 14 est un noeud récepteur comprenant une application de réception de données (« subscriber ») 22 et le noeud 16 est à la fois émetteur et récepteur, comprenant à la fois une application de fourniture des données 24 et une application de réception de données 26. Ces noeuds font partie d'un même domaine DDS, et donc les applications respectives 20, 22, 24 et 26 s'échangent des données.

L'application 20 et l'application 24 transmettent ou publient des données via des messages 28, 30. Les applications 22 et 26 peuvent récupérer les données publiées via les messages de souscription 32, 34.

Pour mieux expliciter le fonctionnement du système, considérons l'exemple très simple suivant : l'application 20 publie régulièrement la température locale TI d'un endroit prédéterminé, par exemple une pièce spécifique d'un bâtiment, en degrés Fahrenheit. Cette donnée a une qualité de service (Qos) associée qui est sa durée de validité sur le réseau. Pendant cette durée de validité, l'application 26 récupère la donnée TI en Fahrenheit et la transmet à l'application 24 qui la convertit en degrés Celsius et publie la donnée TI en degrés Celsius via un message 30 correspondant. L'application 22 récupère la température TI en degrés Celsius via le message 32.

Bien évidemment, l'exemple ci-dessus est donné à titre explicatif. De manière plus générale, un tel système de communication à base de messages est destiné à être appliqué dans de nombreux domaines industriels nécessitant un contrôle et une organisation des activités en temps réel, tels l'aéronautique ou les télécommunications.

Un noeud d'un réseau distribué est un dispositif 40 tel qu'illustré à la figure 2, par exemple un ordinateur, et comprend un processeur 42, apte à gérer les divers modules fonctionnels du dispositif 40, un espace de stockage 44, apte à stocker notamment le module logiciel 46 contenant du code exécutable apte à mettre en oeuvre un procédé de reconfiguration de fonctionnalités d'un système de distribution de données, et une mémoire 48 apte à stocker les entités du système de distribution de données et les données associées, notamment la décomposition des objets de communication en composants selon l'invention.

Le dispositif 40 comporte également des moyens de communication 50 avec un réseau de communications, par exemple Ethernet ou un réseau sans fil 802.11, permettant aux noeuds émetteurs et récepteurs du domaine à communiquer physiquement. Le dispositif 40 comprend également des moyens de saisie des données 52, et, optionnellement, des moyens de visualisation 54.

Comme mentionné ci-dessus, l'invention est décrite en particulier dans son application au système de distribution de données DDS.

Le système DDS est composé de deux couches, une couche bas niveau DCPS (« Data-Centric Publish-Subscribe Model »), de gestion des données et de leurs qualités de service, et une couche haut niveau DLRL (« Data Local Reconstruction Layer ») d'interface avec des applications de haut niveau. La couche DCPS définit des objets de communication génériques appelés Entités (« Entity » en anglais), et tous les objets de communication de DDS sont des spécialisations de l'objet Entité. Chaque Entité a un ensemble de Qos associées, un mécanisme générique d'écoute « Listener » qui est apte à notifier la disponibilité des données relatives à l'Entité, et un état associé (« Status condition »). Plusieurs spécialisations d'Entités DCPS sont définies dans la version 1.2 de DDS, en particulier Domain, Publisher et Subscriber, qui fournissent des interfaces de programmation.

Selon la syntaxe DDS standardisée dans la version 1.2, l'Entité DDS et ses spécialisations prédéfinies sont spécifiées dans un modèle de programmation objet.

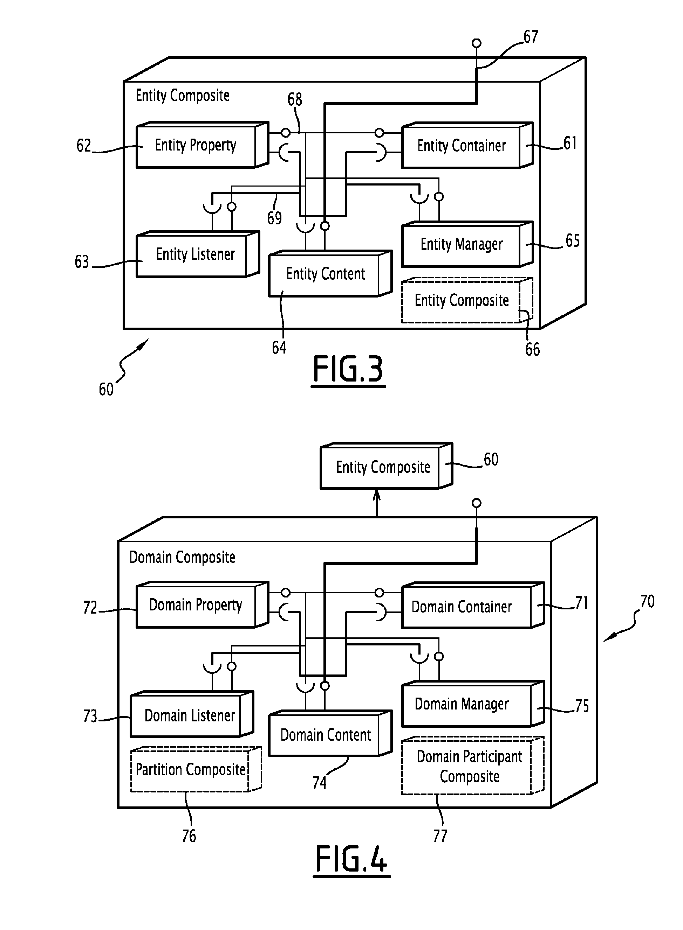

La figure 3 illustre la décomposition d'une Entité DDS selon un modèle à composants, qui sépare l'aspect fonctionnel lié à l'application utilisatrice de l'Entité DDS et la logique de gestion de l'Entité DDS, permettant ainsi la mise à jour en cours d'exécution de certaines fonctionnalités de l'Entité DDS. De plus ces composants sont réflexifs, c'est-à-dire qu'ils implémentent des opérations responsables de fonctionnalités reconfigurables en cours d'exécution. Ainsi, ces composants peuvent s'auto-modifier, sans nécessiter l'installation complète par un programmeur d'une nouvelle version.

La figure 3 illustre un modèle à composants « EntityComposite » 60 comprenant un composant de premier type ou composant fonctionnel « EntityContainer » 61 et quatre composants de deuxième type ou composants non-fonctionnels: le composant « EntityProperty » 62, le composant « EntityListener » 63, le composant « EntityContent » 64 et le composant « EntityManager » 65.

Le composant de premier type 61 reprend l'interface de programmation de l'Entité «Entity » telle que déjà définie par le système DDS, assurant ainsi la compatibilité avec la spécification de DDS.

Les autres composants, appelés composants de deuxième type ajoutent une couche de logique et de gestion intermédiaire, et sont aptes de contrôler des informations liées au composant de premier type, permettant ainsi la mise à jour par ajout ou modification de la qualité de service associée à l'Entité, et plus généralement la reconfiguration en cours d'exécution de fonctionnalités de l'Entité.

Ainsi, le composant de deuxième type « EntityProperty » 62 gère l'ensemble des qualités de service, ou d'autres propriétés fonctionnelles de l'Entité, comme son nom.

Le composant de deuxième type « EntityListener » 63, similaire à l'objet « Listener » défini dans DDS est un composant de communication qui implémente la notification de présence et de disponibilité de données pertinentes pour l'application qui met en oeuvre l'Entité, et la transmission de messages d'erreur, par exemple sur l'envoi ou sur la réception des données, mais également tout événement local à l' « EntityComposite » 60, comme le changement d'une propriété, ou l'arrêt/démarrage d'un autre composant fils.

Le composant de deuxième type « EntityContent » 64 est permet de parcourir l' « EntityComposite » 60 pour en découvrir le contenu au niveau composant, il est le premier composant accessible depuis l'extérieur de l' « EntityComposite » 60, et il est directement connecté à tous les composants fils de l' « EntityComposite » 60. Il gère également l'ajout ou la suppression d'un composant de premier ou de deuxième type dans l' « EntityComposite » 60.

Le composant de deuxième type « EntityManager 65 gère le cycle de vie de l' « EntityComposite » 60 et ses composants fils, notamment il est apte à rendre l' « EntityComposite » 60 indisponible et à le redémarrer, et également implémente des opérations permettant sa reconfiguration.

Le composant en pointillés 66 représente un autre « EntityComposite » où l'entité associée est cible d'une relation de composition avec l'entité associée à l'élément 60, dans l'architecture DDS. L'impact en termes d'agilité de cette décomposition en composants est de permettre à un élément cible d'une telle relation de changer de parent à l'exécution, gardant ses propriétés propres, dans un nouveau contexte proposé par un nouveau parent.

Les relations entre les composants sont également schématisées sur la figure 3. Chaque composant a une interface de programmation (API) associée. On peut voir également les relations entre les composants, implémentées via les API, comme des relations de fourniture et consommation de service.

Le composant « EntityContent » 64 est le seul composant qui fournit un service à l'extérieur, représenté par la référence 67 de la figure 3. Pour cela, le composant 64 est apte à recevoir des données de tous les autres composants, ce qui est représenté par la référence 68 de la figure 3 : le composant 64 est consommateur de services issues de tous les autres composants.

Les autres composants, c'est-à-dire le composant de premier type 61 et les composants de deuxième type 62, 63 et 65 sont à la fois fournisseurs de services 68 et consommateurs de services 69 en provenance des autres modules.

Grâce à cette décomposition en composants, il est possible de mettre à jour ou reconfigurer facilement en cours d'exécution un système DDS déjà déployé sur un ensemble des noeuds d'un réseau. Par exemple, comme expliqué plus en détail ci-après, une demande de reconfiguration d'une qualité de service associée à l'Entité est reçue par l' « EntityContainer » 61, qui la redirige vers l' « EntityProperty » 62 via les échanges de service 68, 69. Ainsi, le composite 60 comporte un mécanisme de fourniture de demande de reconfiguration en cours d'exécution au composant de deuxième type « EntityProperty » 62.

La figure 4 représente schématiquement la décomposition en composants d'une Entité «DomainComposite» qui est une spécialisation ou héritage de « EntityComposite». Ainsi, le mécanisme de spécialisation proposé dans DDS est transposé facilement avec la décomposition en composants de premier type / de deuxième type.

L'Entité « DomainComposite » 70 de la figure 4, correspondant à l'Entité « Domain » de DDS est apte à définir un domaine, donc un réseau distribué de noeuds partageant des données, et comprend le composant de premier type ou composant fonctionnel « DomainContainer » 71 qui est une spécialisation de « EntityContainer » 61, et les composants de deuxième type ou non fonctionnels :
- « DomainProperty » 72 qui est une spécialisation de « EntityProperty » 62,
- « DomainListener » 73 qui est une spécialisation de « EntityListener » 63,
- « DomainContent » 74 qui est une spécialisation de « EntityContent » 64 et
- « DomainManager » 75 qui est une spécialisation de « EntityManager » 65.

De plus, l'Entité «DomainComposite» 70 est liée à une ou plusieurs Entités «PartitionComposite» 76 et à une ou plusieurs Entités «DomainParticipantComposite» 77 par la relation de composition de l'architecture DDS. En effet, en plus de la définition de domaines regroupant des noeuds d'un réseau qui sont représentés ici en tant que « DomainParticipantComposite » 77, DDS offre également la possibilité de définir des partitions logiques spécifiées par une Entité «PartitionComposite».

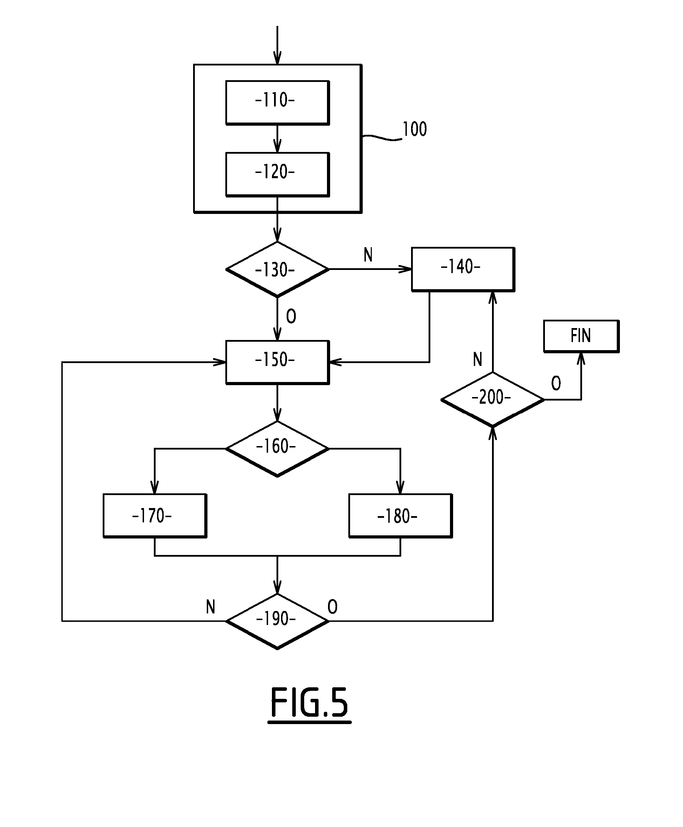

La figure 5 est un logigramme illustrant la mise en oeuvre d'un procédé de déploiement et de reconfiguration d'un système de distribution de données utilisant la décomposition en composants des objets de communication selon l'invention, mis en oeuvre par le processeur 42 sous la commande du module logiciel 48 dans un dispositif 40 implémentant l'invention.

Le procédé décrit à la figure 5 s'applique à la fois dans un premier cas de figure (cas A) où un système d'échange de données selon la spécification DDS classique est déjà déployé sur un ensemble de noeuds d'un réseau et l'exécution de la distribution des données est effective, et dans un deuxième cas de figure (cas B) où un nouveau système d'échange de données à base de messages est mis en place directement avec un modèle décomposé en composants selon l'invention.

Le procédé commence par une première étape 100 de création du modèle à composants « EntityComposite », et qui comprend une première sous-étape 110 de création des composants de deuxième type et une deuxième sous-étape 120 de création du composant de premier type «EntityContainer», qui implémente l'API de l'entité DDS correspondante. Ainsi, l' « EntityContainer » est prêt à héberger une entité DDS et les autres composants de deuxième type sont aptes à compléter l'implémentation de l'entité DDS.

Il est ensuite vérifié à l'étape 130 si l'application implémentée par le composant « EntityContainer » est en cours d'exécution. Dans le cas où l'application est en cours d'exécution, l'étape 130 est suivie d'une étape 140 d'arrêt de l'exécution de l'application mise en oeuvre par le composant « EntityContainer ».

Si l'application est détectée comme inactive lors du test 130 ou après l'arrêt de l'étape 140, l'étape suivante est l'étape 150 d'obtention de l'Entité DDS à intégrer dans le modèle à composants, soit une Entité existante dans le cas A ou une nouvelle Entité dans le cas B.

L'étape 160 met en oeuvre un test pour déterminer si l'entité DDS obtenue est une Entité existante ou non.

Dans le cas A où l'Entité est une Entité existante, les propriétés de chacun des composants de deuxième type sont complétées à l'étape 170 à partir des propriétés de l'entité existante afin de restaurer un état courant ou contexte de l'application sur laquelle le modèle à composants vient se greffer de manière automatique. En cas d'échec, le composant « EntityContainer » reste indisponible, et la reconfiguration se fait alors manuellement, en modifiant certaines propriétés des composants de deuxième type

Dans le cas d'une nouvelle entité, l'étape 160 est suivie de l'étape 180 d'initialisation des propriétés des composants de deuxième type en fonction de l'application.

Les deux étapes 170 et 180 sont suivies d'une étape 190 de vérification de l'état d'exécution du composant « EntityContainer ».

Si le composant n'est pas en cours d'exécution, l'étape 190 est suivie de l'étape 150 déjà décrite.

Si le composant « EntityContainer » a été redémarré et est en cours d'exécution, le test 190 est suivi d'un test de vérification 200 apte à vérifier si le modèle « EntityComposite créé comprend une entité DDS. En cas de réponse positive, l'exécution se poursuit et le procédé de déploiement et reconfiguration prend fin. En cas de réponse négative, l'étape 200 est suivie par l'étape 140 d'arrêt de l'exécution déjà décrite.

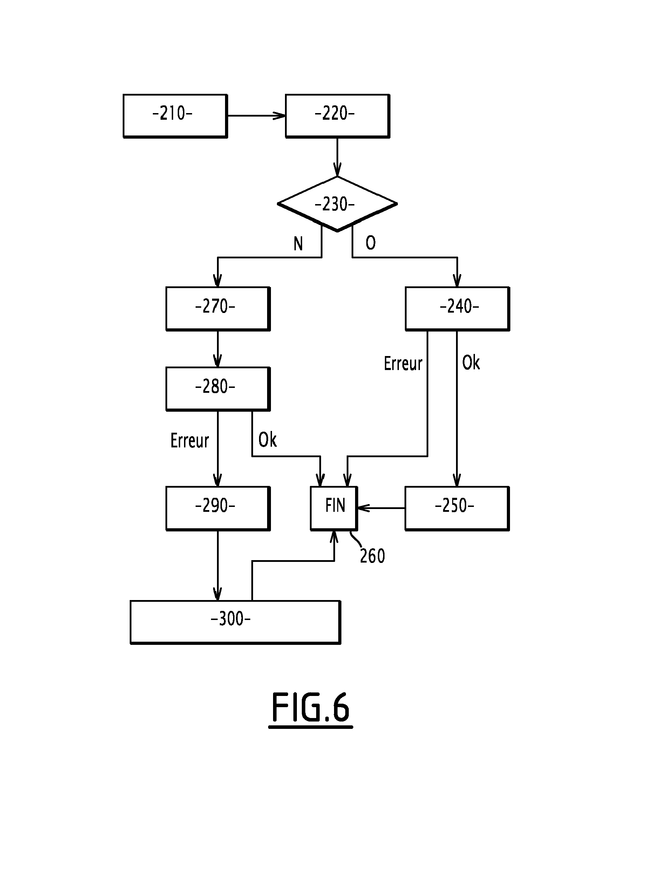

La figure 6 est un logigramme illustrant la mise en oeuvre d'un procédé de modification d'une qualité de service associée à un objet de communication décomposé en composants selon l'invention, mis en oeuvre par le processeur 42 sous la commande du module logiciel 48 dans un dispositif 40 implémentant l'invention.

Dans cet exemple, une qualité de service Q associée à l'objet de communication est mise à la valeur QV. Par exemple, on considère le changement de la persistance en mémoire d'une donnée, par exemple en changeant la valeur de la persistance de 0 , correspondant à la mémorisation de la donnée en mémoire volatile, à la valeur de persistance de 1, correspondant à la mémorisation de la donnée dans une mémoire pérenne, par exemple dans un fichier ou une base de données, permettant de retrouver la donnée après arrêt puis redémarrage du système.

Dans une première étape 210, le composant de premier type ou composant fonctionnel (composant « EntityContainer » 61 de la figure 4) reçoit une demande de mise à jour de la qualité de service Q à la valeur QV.

La demande de mise à jour de la qualité de service est redirigée du composant de premier type « EntityContainer » vers le composant de deuxième type « EntityProperty ». Ainsi, un mécanisme de fourniture d'information de reconfiguration ou mise à jour à l'exécution est mis en oeuvre dans l'objet de communication.

A l'étape 220, le composant « EntityProperty » reçoit la demande de mise à jour de la qualité de service Q à la valeur QV.

L'étape 220 est suivie de l'étape de test 230, qui consiste à tester si le composant « EntityProperty » a la possibilité de gérer des implémentations QVI correspondant à la qualité de service Q.

En cas de réponse positive au test 230, conformément à la décomposition en composants de l'invention, le composant « EntityProperty » gère à la fois les valeurs et les implémentations de la qualité de service Q. Dans ce cas, l'étape de test 230 est suivie d'une étape 240 dans laquelle le composant « EntityProperty » effectue le changement d'implémentation de la qualité de service Q avec la valeur QV. Dans l'exemple du changement de la valeur de la persistance, le composant « EntityProperty » gère l'application de l'implémentation de la persistance avec stockage dans un fichier.

Si aucune erreur n'est levée (branche 'OK'), le changement d'implémentation associé à la qualité de service a été effectué avec succès, et l'étape 240 est suivie d'une étape 250 dans laquelle la valeur QV de la qualité de service Q est stockée dans le composant « EntityProperty ». Si une erreur est levée à l'étape 240 de mise en place du changement d'implémentation, alors l'étape 240 est suivie de l'étape de fin 260. Optionnellement, une erreur est levée permettant une intervention manuelle d'un programmeur.

En cas de réponse négative au test 230, ce test est suivi de l'étape 270 dans laquelle, similairement à l'étape 250 précédemment décrite, la valeur QV associée à la qualité de service Q est stockée dans le composant « EntityProperty ». On est ici dans le cas où le composant « EntityProperty » ne gère que la valeur de la qualité de service, mais pas son implémentation, qui continue à être gérée par le composant « EntityContainer ». Dans ce cas, au moment où la valeur de la qualité de service égale à QV est stockée dans le composant « EntityProperty », il y a une différence entre cette valeur (par exemple donnée stockée dans un fichier, persistance=1) et la valeur effectivement implémentée, qui est la valeur précédente (par exemple donnée volatile, persistance=0).

L'étape 270 est suivie de l'étape 280 dans laquelle l'implémentation de la nouvelle valeur de la qualité de service est re-dirigée vers le composant « EntityContainer ».

Si le composant « EntityContainer » a la possibilité de modifier l'implémentation de la qualité de service, alors l'étape 280 est suivie de l'étape de fin 260.

Si l'implémentation de la qualité de service dans le composant « EntityContainer » est statique et non modifiable, une erreur est levée, et l'étape 280 est suivie par l'étape 290 de reconfiguration de l' « EntityContainer » par le composant « EntityManager ».

Toutes les valeurs afférentes aux éléments du composant « EntityContainer » sont stockées dans le composant « EntityProperty ». Pour la qualité de service Q, c'est la nouvelle valeur souhaitée QV qui est stockée dans le composant « EntityProperty », donc le nouveau composant « EntityContainer » sera initialisé avec cette valeur.

Le nouveau « EntityContainer » est créé à l'étape 300 avec les valeurs stockées dans le composant « EntityProperty », les propriétés stockées dans l' « EntityProperty » et les propriétés et valeurs du composant « EntityListener ».

Ce nouveau composant « EntityProperty » implémente la qualité de service Q avec la valeur QV, comme demandé.

Le procédé prend fin à l'étape 260.

## Revendications

1. Système de distribution de données à base d'échange de messages asynchrones en mode publication/souscription, permettant l'échange de données selon diverses qualités de service entre au moins un émetteur apte à mettre en oeuvre une application de fourniture de données et un récepteur apte à mettre en oeuvre une application de réception des données, les émetteurs et récepteurs étant interconnectés via un réseau de communications, via des objets de communication, chaque objet de communication fournissant une interface de programmation pour échanger des messages selon ledit système de distribution,
**caractérisé en ce qu'**un objet de communication (60, 70) est décomposé en une pluralité de composants (61-65, 71-75) comprenant un composant de premier type (61, 71) comprenant ladite interface de programmation et au moins un composant de deuxième type (62, 63, 64, 65, 72, 73, 74, 75) apte à contrôler des informations liées au composant de premier type et fournissant des opérations responsables de fonctionnalités reconfigurables en cours d'exécution,
ledit objet de communication comportant un mécanisme de fourniture de demande de reconfiguration en cours d'exécution audit au moins un composant de deuxième type (62),
de manière à permettre la reconfiguration en cours d'exécution d'une fonctionnalité associée à l'objet de communication.

2. Système de distribution de données selon la revendication 1, caractérisé en ce chaque objet de communication (60, 70) a un ensemble de qualités de service (Q) prédéterminé associé et la reconfiguration en cours d'exécution comprend l'ajout et/ou la modification en cours d'exécution d'une qualité de service associée à l'objet de communication.

3. Système de distribution de données selon l'une des revendications 1 ou 2, **caractérisé en ce qu'**un dit composant de deuxième type (62) est apte à sauvegarder des informations de contexte liées à au moins un élément contenu dans le composant de premier type.

4. Système de distribution de données selon la revendication 3, **caractérisé en ce que** une dite information de contexte est une valeur (QV) correspondant à une qualité de service (Q) associée à audit objet de communication.

5. Système de distribution de données selon l'une quelconque des revendications 1 à 4, **caractérisé en ce que** ladite décomposition comprend une pluralité de composants de deuxième type incluant un composant de gestion de règles (62, 72), un composant de communication (63, 73), un composant de découverte/ajout/suppression de contenu (64, 74) et un composant de gestion de reconfiguration (65, 75).

6. Système de distribution de données selon l'une quelconque des revendications 1 à 5, **caractérisé en ce qu'**un objet de communication (60, 70) contient au moins un objet de communication cible (66, 76, 77) qui hérite dudit objet de communication (60, 70), un dit objet de communication cible (66, 76, 77) étant également décomposé en une pluralité de composants, un objet de communication cible étant apte à changer d'objet de communication parent à l'exécution.

7. Procédé de reconfiguration de fonctionnalités d'un système de distribution de données à base d'échange de messages asynchrones en mode publication/souscription selon la revendication 1 en cours d'exécution dans un réseau de communications,
**caractérisé en ce qu'**il comporte les étapes suivantes, mises en oeuvre pour un objet de communication:
- création (100) d'un composite associé audit objet de communication, contenant un composant de premier type et au moins un composant de deuxième type apte à contrôler des informations liées au composant de premier type et fournissant des opérations responsables de fonctionnalités reconfigurables en cours d'exécution,
- vérification (130) de l'arrêt de l'exécution dudit objet de communication, et
- mise à jour (170, 180) des propriétés du composant de deuxième type en fonction dudit objet de communication.

8. Procédé de reconfiguration de fonctionnalités d'un système de distribution selon la revendication 7, **caractérisé en ce qu'**il comprend, en outre, lors d'une modification d'une qualité de service (Q) associée à un objet de communication, les étapes suivantes :
- réception (210) par le composant de premier type dudit objet de communication d'une nouvelle valeur de qualité de service (QV) associée à ladite qualité de service (Q) à modifier,
- redirection (220) de ladite nouvelle valeur de qualité de service (QV) à un composant de deuxième type associé audit objet de communication, et
- réalisation (240, 290) d'une implémentation (QVI) de ladite qualité de service (Q) correspondant à ladite nouvelle valeur de qualité de service (QV) par ledit composant de deuxième type.
